# EUROPÄISCHE PATENTSCHRIFT

(11) **EP 3 388 282 B1**
(45) Veröffentlichungstag und Bekanntmachung des Hinweises auf die Patenterteilung: **18.01.2023**
(21) Anmeldenummer: 18164288.5
(22) Anmeldetag: 27.03.2018
(51) Int. Cl.: B60N 2/50, B60N 2/52

(54) **VORRICHTUNG ZUR HÖHENVERSTELLUNG EINES FAHRZEUGSITZES**
DEVICE FOR ADJUSTING THE HEIGHT OF A VEHICLE SEAT
DISPOSITIF DESTINÉ AU RÉGLAGE EN HAUTEUR D'UN SIÈGE DE VÉHICULE

(30) Priorität: 11.04.2017 DE 102017107761
(43) Veröffentlichungstag der Anmeldung: 17.10.2018
(73) Patentinhaber: AGUTI PRODUKTENTWICKLUNG & DESIGN GMBH, 88085 Langenargen (DE)
(72) Erfinder: Rogg, Christian, 88142 Wasserburg (DE)
(74) Vertreter: Otten, Roth, Dobler & Partner mbB Patentanwälte

(56) Entgegenhaltungen:
- WO-A1-00/35708
- FR-A- 1 488 536
- US-A- 3 638 897
- US-A- 4 351 556
- US-A- 5 251 864
- US-A- 5 975 508

## Beschreibung

### Stand der Technik

Vorrichtungen zur Höhenverstellung eines Fahrzeugsitzes sind bereits bekannt.

Eine bekannte Vorrichtung zur Höhenverstellung eines Fahrzeugsitzes ist zwischen einem Fahrzeug und dem Fahrzeugsitz anordenbar und umfasst ein Oberteil, welches höhenverstellbar zu einem Unterteil vorhanden ist, wobei das Unterteil und das Oberteil über Verbindungselemente beweglich miteinander gekoppelt sind. Des Weiteren ist zwischen Unterteil und Oberteil eine Verstelleinheit in Form eines Stellzylinders vorhanden, um einen Abstand zwischen Unterteil und Oberteil einzustellen und beim Fahren des Fahrzeugs auftretende Schwingungen zu dämpfen. Das Dokument FR 2 014 088 536 offenbart eine solche Vorrichtung.

Nachteilig an einer derartigen Vorrichtung ist, dass bei insbesondere großen Schwingungsamplituden, welche bei einer Fahrt auftreten können, eine Dämpfungseinrichtung der Vorrichtung einen unteren und/oder ein oberen Anschlag der Verstelleinheit erreicht und der Fahrzeugsitz an diesem hart und für einen Nutzer des Fahrzeugsitzes unvorteilhaft ggf. schmerzhaft abgebremst wird.

### Aufgabe und Vorteile der Erfindung

Der Erfindung liegt die Aufgabe zugrunde eine verbesserte Vorrichtung zur Höhenverstellung eines Fahrzeugsitzes, insbesondere eine verbesserte Vorrichtung zur Dämpfung auftretender Schwingungen bereitzustellen.

Die Aufgabe wird durch die Merkmale des unabhängigen Anspruchs 1 gelöst.

In den abhängigen Ansprüchen sind vorteilhafte und zweckmäßige Ausführungsformen der Erfindung angegeben.

Die Erfindung geht von einer Vorrichtung zur Höhenverstellung und/oder zur Dämpfung eines Fahrzeugsitzes aus, wobei die Vorrichtung ein Unterteil zur Anordnung an ein Fahrzeug umfasst, wobei die Vorrichtung ein Oberteil zur Anordnung eines Fahrzeugsitzes und/oder zur Anordnung einer Dreheinheit für einen Fahrzeugsitz aufweist, wobei das Unterteil und das Oberteil über einen Stellarm miteinander gekoppelt sind, wobei die Vorrichtung ein Dämpfungsorgan besitzt.

Ein Fahrzeug, in welchem der Fahrzeugsitz mit einer solchen Vorrichtung zur Höhenverstellung und/oder zur Federung des Fahrzeugsitz vorteilhafterweise anordenbar ist, ist beispielsweise als ein Automobil, z.B. als ein LKW, als eine Baumaschine, als ein Omnibus, als ein Transporter, als ein Wohnmobil, als ein Reisemobil und/oder als ein Caravan ausgebildet. Vorstellbar ist auch, dass das Fahrzeug als ein Wohnwagen bzw. als ein Wohnanhänger ausgestaltet ist.

Der Fahrzeugsitz kann als ein Fahrer- oder Beifahrersitz vorhanden sein und ist insbesondere in einem vorderen Bereich des Fahrzeugs anordenbar. Denkbar ist auch, dass der Fahrzeugsitz in einem hinteren Bereich des Fahrzeugs anordenbar ist. Der Fahrzeugsitz ist beispielsweise als ein Einzelsitz ausgestaltet, z.B. als Fahrersitz.

Der wesentliche Aspekt der Erfindung ist darin zu sehen, dass das Dämpfungsorgan zwischen dem Oberteil und dem Unterteil vorhanden ist, wobei das Dämpfungsorgan dazu ausgebildet ist, einen Abstand des Oberteils zum Unterteil zu verändern und wobei die Vorrichtung ein Federelement umfasst und das Federelement derart an der Vorrichtung vorhanden ist, dass es entgegen einer Ausdehnungsrichtung des Dämpfungsorgans wirkt, wobei das Federelement als eine Schraubenfeder oder als eine Spiralfeder ausgebildet ist.

Das Dämpfungsorgan ist vorteilhafterweise als eine pneumatische und/oder hydraulische Dämpfungseinheit ausgebildet. Das Dämpfungsorgan ist z.B. als Luftbalg, Federbalg, z.B. als einfacher abgeschlossener Schlauch, bspw. als Gummischlauch vorhanden. Vorteilhafterweise ist das Dämpfungsorgan in mehrere Raumrichtungen dehnbar und/oder bewegbar vorhanden. Das Dämpfungsorgan ist neben einer Höhenverstellung des Fahrzeugsitzes unter anderem zur Dämpfung von während der Fahrt auftretenden Schwingungen zwischen dem Unterteil und dem Oberteil, bspw. zwischen dem Fahrzeugsitz und dem Fahrzeug, vorgesehen.

Das Dämpfungsorgan ist beispielsweise positionsfest am Oberteil und/oder am Unterteil festgelegt, z.B. montiert. Das Dämpfungsorgan ist vorteilhafterweise derart an der Vorrichtung vorhanden, dass wenn sich das Dämpfungsorgan in Ausdehnungsrichtung ausdehnt, ein Abstand zwischen Oberteil und Unterteil hierdurch vergrößert wird.

Das Federelement ist beispielsweise als eine Spiralfeder, insbesondere eine Flach-Spiralfeder, eine Schenkelfeder, eine Drehfeder und/oder Torsionsfeder, z.B. als Torsionsfederstab, ausgebildet. Weiter erweist es sich von Vorteil, dass zwei oder mehr Federelemente, insbesondere genau zwei Federelemente oder insbesondere genau vier Federelemente, an der Vorrichtung vorhanden sind. Das Federelement ist bspw. als eine Druckfeder oder eine Zugfeder ausgebildet.

Insbesondere im Fall, dass das Federelement als eine Spiralfeder oder als eine Schraubenfeder ausgebildet ist, besitzt das Federelement einen Drahtdurchmesser zwischen 1mm und 4,5mm, bsw. zwischen 2mm und 3,5mm. Beispielsweise besitzt das Federelement einen mittleren Drahtdurchmesser von 1,5mm, 2mm, 2,2mm, 2,3mm, 2,4mm, 2,6mm, 2,7mm, 2,8mm, 2,9mm, 3mm, 3,1mm, 3,2mm, 3,3m, 3,4mm, 3,5mm oder 4mm, insbesondere von 2,5mm.

Ein Federkörper des Federelements, welcher kraftunbelastet ist, besitzt eine Länge zwischen 35mm und 200m, z.B. 38mm oder 191mm. Vorteilhafterweise besitzt der Federkörper im unbelasteten, insbesondere ungespannten Zustand eine Länge zwischen 35mm und 45mm oder zwischen 150mm und 210mm, insbesondere eine Länge von 38mm oder von 191mm.

Der Federkörper des Federelements umfasst beispielsweise im Fall einer Ausbildung des Federelements als Spiralfeder oder Schraubenfeder ausschließlich einen Windungsbereich. Das Federelement kann weiterhin Anbindungselemente aufweisen. Die Anbindungselemente sind z.B. dazu vorgesehen, das Federelement an Elemente der Vorrichtung anzuordnen. Die Anbindungselemente sind z.B. an sich gegenüberliegenden Enden des Federkörpers vorhanden. Zur Länge des Federkörpers sind insbesondere nicht die Anbindungselemente des Federelements zu zählen. Vorteilhafterweise besteht das Federelement einzig aus einem Federkörper einer Spiralfeder bzw. aus einem Federkörper einer Schraubenfeder.

Eine Spiralfeder oder eine Schraubenfeder besitzt vorteilhafterweise eine Windungsanzahl zwischen 4 und 10 Windungen. Beispielsweise besitzt die Spiralfeder oder die Schraubenfeder 4, 4,5, 5, 6, 6,5, 7, 7,5, 8 oder insbesondere genau 5,5 Windungen.

Vorteilhafterweise besitzt das Federelement eine insbesondere maximale Federkraft zwischen 180N und 650N, beispielsweise zwischen 500N und 650N. Denkbar ist, dass mehrere, insbesondere zwei Federelemente vorhanden sind, in diesem Fall ist es von Vorteil, dass die mehreren Federelemente eine insbesondere maximale Gesamtfederkraft zwischen 180N und 650N, beispielsweise zwischen 500N und 650N aufweisen.

Bevorzugterweise besitzt das Federelement, insbesondere der Federkörper, einen insbesondere maximalen Außendurchmesser zwischen 19mm und 21mm. Beispielsweise besitzt das Federelement, insbesondere der Federkörper, einen insbesondere maximalen Außendurchmesser von 19mm, 20mm, 20,5mm oder 21mm, insbesondere von 19,5mm.

Als vorteilhaft erweist sich auch, dass die Vorrichtung zwei oder mehr Stellarme aufweist, wobei das Oberteil und die Stellarme bspw. parallelogrammartig angeordnet und zueinander verstellbar vorhanden sind. Vorteilhafterweise bilden das Oberteil und die Stellarme ein Parallelogramm aus.

Bevorzugterweise umfasst die Vorrichtung drei, vier oder insbesondere sechs Stellarme. Besitzt die Vorrichtung zwei oder mehr Stellarme, insbesondere sechs Stellarme, sind beispielsweise jeweils zwei Stellarme parallel, insbesondere parallelbeweglich zueinander vorhanden. Z.B. sind Bewegungen zweier Stellarme über eine Mechanik der Vorrichtung synchronisiert. Beispielsweise sind vier Stellarme der sechs Stellarme drehbeweglich am Unterteil festgelegt. Die zwei verbleibenden Stellarme der sechs Stellarme sind beispielsweise parallel zum Oberteil ausgerichtet vorhanden.

Aufgrund der parallelogrammartigen Anordnung des Oberteils und der Stellarme besitzt ein erster Stellarm relativ zum Unterteil während einer vertikalen Abstandsveränderung des Oberteils relativ zum Unterteil, eine horizontale Bewegungsrichtungskomponente, insbesondere ausschließlich eine horizontale Bewegungsrichtungskomponente. Die vertikale Abstandsveränderung kann eine Höhenverstellung des Oberteils relativ zum Unterteil sein. Der erste Stellarm ist vorteilhafterweise schwingbeweglich zum Unterteil ausgebildet.

Ist das Dämpfungsorgan z.B. am Oberteil und am Unterteil befestigt, erfährt es während einer Höhenverstellung z.B. eine horizontale Verwindung bzw. eine horizontale Verschiebung.

Denkbar ist auch, dass die Vorrichtung zwei oder mehr Stellarme, insbesondere vier Stellarme, aufweist, wobei die Stellarme scherenartig an der Vorrichtung vorhanden sind. Vorteilhafterweise umfasst die Vorrichtung eine scherenartige Mechanik oder eine Scherenverstellung, wobei die Stellarme Teil der scherenartigen Mechanik oder der Scherenverstellung sind. Die Stellarme sind vorteilhafterweise als Hebel ausgebildet bzw. besitzen eine Hebelfunktion.

Außerdem von Vorteil ist, dass das Federelement am Unterteil angeordnet ist.

Beispielsweise stützt sich das Federelement am Unterteil ab, z.B. ist das Federelement am Unterteil befestigt, insbesondere fixiert. Ist das Federelement am Unterteil angeordnet, wirkt das Federelement insbesondere derart, dass das mit dem Stellarm gekoppelte Oberteil in Richtung eines minimalen Abstands zwischen Unterteil und Oberteil gedrängt, z.B. gezogen wird. Vorteilhafterweise wirkt das Federelement auf einen Stellarm der Vorrichtung, insbesondere wirkt das Federelement direkt oder unmittelbar auf einen Stellarm der Vorrichtung.

Vorstellbar ist auch, dass das Federelement an einem Stellarm und/oder am Oberteil befestigt ist. Z.B. ist das Federelement derart an der Vorrichtung vorhanden, dass es zwischen zwei Stellarmen und/oder einem Stellarm und dem Oberteil und/oder mehreren Stellarmen und dem Oberteil wirkt. Vorstellbar ist, dass eine Rotationsachse des Federelements parallel zu einer Schwenkachse, insbesondere einer Drehachse eines Stellarms vorhanden ist.

Das Oberteil ist zwischen einem Endanschlag des Federelements, und einem Endanschlag des Dämpfungsorgans beweglich gelagert. Beispielsweise ist das Oberteil zwischen einem Endanschlag des Federelements, und einem Endanschlag des Dämpfungsorgans gefedert und/oder gedämpft gelagert.

Vorteilhafterweise bildet der Anschlag des Dämpfungsorgans einen unteren Anschlag der Vorrichtung und der Anschlag des Federelements einen oberen Anschlag der Vorrichtung. Im angeordneten Zustand der Vorrichtung ist mit unten ein Bereich in Richtung Untergrund, auf welchem das Fahrzeug sich bewegt gemeint und mit oben eine zu unten entgegengesetzte Richtung, z.B. in Richtung Fahrzeughimmel des Fahrzeugs bzw. in Richtung Fahrzeugsitz.

Bevorzugterweise sind das Federelement und das Dämpfungsorgan in einer Weise ausgebildet und an der Vorrichtung angeordnet, dass das Oberteil derart zwischen einem Anschlag des Federelements und einem Anschlag des Dämpfungsorgan beweglich, insbesondere gedämpft, gelagert ist, dass das Oberteil bei einer Auslenkung aus einer Ruhelage bzw. aus einer Fahrposition keinen der beiden Anschläge erreicht. Eine Auslenkung aus der Ruhelage bzw. aus einer Fahrposition kann aufgrund einer Unebenheit des Untergrunds, auf welchem sich das Fahrzeug, in welchem der Fahrzeugsitz mit der Vorrichtung verbaut ist, bewegt verursacht sein. Vorteilhafterweise ist die Vorrichtung derart ausgebildet, dass unabhängig von einer Größe der Auslenkung keiner der beiden Anschläge durch einen Auslenkung des Oberteils erreicht wird.

Außerdem ist es vorteilhaft, dass das Federelement in einer Weise zwischen dem Unterteil und einem ersten Stellarm angeordnet ist, dass das Federelement einer Ausdehnung des Dämpfungsorgans entgegenwirkt, z.B. einer Volumenausdehnung und/oder einer Auslenkung des Dämpfungsorgans.

Vorteilhafterweise ist das Federelement derart an der Vorrichtung vorhanden bzw. ausgestaltet und wirkt mit einer Federkraft einer Ausdehnungskraft des Dämpfungsorgans in einer Weise entgegen, dass das Dämpfungsorgan eine maximale Ausdehnung, ein maximales Volumen oder eine maximale Auslenkung, insbesondere einen oberen Anschlag des Dämpfungsorgans nicht erreicht.

In einer vorteilhaften Ausgestaltung der Vorrichtung ist eine Rotationsachse des Federelements parallel zu einer Bewegungsrichtung des Oberteils vorhanden.

Bevorzugterweise ist die Rotationsachse senkrecht zu einer Anlagefläche des Unterteils am Fahrzeug oder einer Anlagefläche des Oberteils zur Anordnung des Fahrzeugsitzes vorhanden. Beispielsweise ist die Rotationsachse des Federelements senkrecht zu einer Schwenkachse eines Stellarms, insbesondere senkrecht zu allen Schwenkachsen eines Stellarms, z.B. senkrecht zu allen Schwenkachsen aller Stellarme, ausgebildet vorhanden. Insbesondere ist die Rotationsachse des Federelements vertikal ausgerichtet vorhanden.

Überdies ist es von Vorteil, dass das Federelement mit einem Stellarm, insbesondere dem ersten Stellarm, koppelt.

Vorteilhafterweise ist ein Ende des Federelements mit einem Stellarm verbunden, insbesondere fest, z.B. unlösbar. Beispielsweise ist das Ende des Federelements mit dem ersten Stellarm verbunden.

Vorstellbar ist außerdem, dass zwei oder mehr Federelemente vorhanden sind. Beispielsweise ist ein erstes Federelement mit einem Stellarm verbunden und ein zweites Federelement mit einem weiteren Stellarm, wobei zum Beispiel die beiden Stellarme in einer Seitenansicht auf die Vorrichtung gesehen hintereinander angeordnet sind.

Denkbar ist auch, dass ein Ende des Federelements geführt an einem Stellarm vorhanden ist. Vorstellbar ist außerdem, dass das Ende abschnittsweise am Stellarm angreift. Z.B. wirkt das Federelement abschnittsweise auf den Stellarm bzw. übt abschnittsweise eine Kraft auf den Stellarm aus. Beispielsweise ist das Federelement dazu ausgebildet, mit einem Mitnehmer eines Stellarms zu koppeln. Beispielsweise wirkt das Federelement jederzeit, insbesondere in jeder Position des ersten Stellarms, mit einer Kraft auf den ersten Stellarm.

Außerdem wird vorgeschlagen, dass eine Schwenkachse, insbesondere eine Drehachse eines Stellarms am Unterteil positionsfest vorhanden ist.

Beispielsweise ist ein zweiter Stellarm über eine erste Schwenkachse schwenkbar, insbesondere drehbar am Unterteil gelagert. Vorstellbar ist auch, dass der zweite und ein dritter Stellarm über die erste Schwenkachse schwenkbar, insbesondere drehbar am Unterteil gelagert sind. Ebenfalls denkbar ist, dass der zweite Stellarm über die erste Schwenkachse und der dritte Stellarm über eine zweite Schwenkachse schwenkbar, insbesondere drehbar am Unterteil gelagert sind.

Vorteilhafterweise ist die Vorrichtung derart ausgebildet, dass der zweite Stellarm und der dritte Stellarm in einem Winkelbereich, insbesondere in einem Schwenkbereich, z.B. einem Drehbereich, zwischen 0° und 70°, insbesondere zwischen 0° und 60°, um die erste und/oder die zweite Schwenkachse schwenken. Beispielsweise schwenken der zweite und der dritte Stellarm in einem Winkelbereich von etwa +/- 35°, +/- 30°, +/-25°, +/- 20° oder +/- 15° um die jeweilige Schwenkachse.

Insbesondere sind die Schwenkachsen derart vorhanden, dass das Oberteil relativ zum Unterteil zwischen einem minimalen Abstand zum Unterteil und einem maximalen Abstand zum Unterteil bewegbar ist.

Vorteilhafterweise befindet sich die Schwenkachse mit denen der zweite und der dritte Stellarm am Unterteil bewegbar aufgenommen ist in Richtung einer Längsachse des zweiten und des dritten Stellarms betrachtet in einem mittleren Bereich der Stellarme. Beispielsweise befindet sich die Schwenkachse mit denen der zweite und der dritte Stellarm am Unterteil bewegbar aufgenommen ist zwischen einer Schwenkachse, mit welcher der zweite und/oder der dritte Stellarm mit dem Oberteil gekoppelt ist, und einer Schwenkachse, mit welcher der zweite und/oder dritte Stellarm mit dem ersten Stellarm gekoppelt ist.

Auch ist es von Vorteil, dass die Vorrichtung mindestens sechs Schwenkachsen umfasst.

Vorteilhafterweise umfasst die gesamte parallelogrammartige Anordnung genau sechs Schwenkachsen. An einem Schwenkarm der Vorrichtung, insbesondere am zweiten und dritten Stellarm, sind bevorzugterweise jeweils drei Schwenkachsen ausgebildet. Bevorzugterweise sind am ersten Stellarm genau zwei Schwenkachsen vorhanden. Vorteilhafterweise sind die Stellarme zusammen an mindestens sechs Schwenkachsen der Vorrichtung drehbeweglich gelagert.

Bevorzugterweise bewegen sich genau zwei, insbesondere vier Schwenkachsen der Vorrichtung bei einer Bewegung des Oberteils relativ zum Unterteil entlang einer Kreisbahn, insbesondere entlang eines Teilkreises. Beispielsweise bewegen sich zwei Schwenkachsen der Vorrichtung, insbesondere genau zwei Schwenkachsen der Vorrichtung, bei einer Bewegung des Oberteils relativ zum Unterteil um eine Rotationsachse einer, weiteren Schwenkachse. Z.B. bewegen sich jeweils zwei Schwenkachsen von z.B. vier Schwenkachsen der Vorrichtung bei einer Bewegung des Oberteils relativ zum Unterteil um jeweils eine Rotationsachse einer weiteren Schwenkachse.

Des Weiteren ist es von Vorteil, dass das Oberteil drehbeweglich zum Unterteil vorhanden ist.

Aufgrund der parallelogrammartigen Anordnung besitzt das Oberteil bei einer Bewegung relativ zum Unterteil beispielsweise sowohl eine vertikale als auch eine horizontale Bewegungskomponente, wobei die vertikale Bewegungskomponente des Oberteils, z.B. eine vertikalen Bewegungsstrecke des Oberteils, im Vergleich zur horizontalen Bewegungskomponente des Oberteils, z.B. eine horizontalen Bewegungsstrecke des Oberteils, vergleichsweise groß ausgebildet ist.

Vorteilhafterweise bewegt sich das Oberteil bei einer Bewegung relativ zum Unterteil auf einer Kreisbahn, insbesondere entlang einer Teilkreisbahn bzw. eines Teilkreises.

Vorteilhafterweise ist das Oberteil über den zweiten Stellarm und/oder den dritten Stellarm drehbeweglich mit dem Unterteil gekoppelt.

Überdies ist es vorteilhaft, dass eine Federkraft des Federelements einstellbar vorhanden ist. Beispielsweise ist das Federelement als Flachspiralfeder vorhanden und kann durch vergleichsweise einfaches Drehen der Flachspiralfeder, z.B. durch Ziehen an einem am Rotationszentrum befestigten Ende der Flachspiralfeder, insbesondere werkzeuglos gespannt oder gelöst werden.

Beispielsweise ist eine insbesondere selbsthemmende Einstellmechanik vorhanden, mit welcher eine Federkraft des Federelements für einen Nutzer des Fahrzeugsitzes einstellbar ist. Beispielsweise ist die Federkraft des Federelements durch Drehen eines Einstellelements der Einstellmechanik einstellbar.

Auch wird vorgeschlagen, dass die Vorrichtung einen Schalter umfasst, welcher dazu ausgestaltet ist, eine Ausdehnung des Dämpfungsorgans zu schalten und/oder zu regulieren. Beispielsweise kann der Schalter dazu vorgesehen sein, eine elektrische Zuleitung eine Pumpe zu schalten, welche das Dämpfungsorgan z.B. pneumatisch beaufschlagt. Außerdem ist es vorstellbar, dass mittels des Schalters ein Ventil schaltbar ist, um einen Druck innerhalb des Dämpfungsorgans zu regulieren oder einzustellen.

Weiter wird vorgeschlagen, dass das Federelement derart vorhanden ist, dass das Federelement insbesondere ausschließlich im Bereich einer Endlage des Oberteils wirkt, insbesondere gegen die Ausdehnung des Dämpfungsorgans. Bevorzugterweise koppelt das Federelement einen Stellarm mit einem Oberteil oder einem Unterteil ausschließlich im Bereich einer Endlage des Oberteils. Die Endlage des Oberteils ist insbesondere der Bereich einer maximalen Ausdehnung des Dämpfungsorgans. Beispielsweise koppelt das Federelement im Ruhezustand einen Stellarm nicht mit einem Oberteil oder nicht mit einem Unterteil.

Vorteilhafterweise ist das Federelement zwischen zwei Stellarmen, insbesondere mittig, an einer Querstrebe angeordnet. Die Querstrebe verbindet die beiden Stellarme derart, dass eine Bewegung der Stellarme synchronisiert ist. Beispielsweise sind die Stellarme über die Querstrebe starr miteinander verbunden. Die Querstrebe verbindet bevorzugterweise die ersten Stellarme der Vorrichtung miteinander. Beispielsweise ist das Federelement zwischen dem Unterteil und den ersten Stellarmen ausgebildet.

Die Querstrebe ist beispielsweise als ein Rohr, insbesondere als ein Vierkantrohr ausgeformt. Denkbar ist auch, dass die Querstrebe leistenartig vorhanden ist. Beispielsweise durchgreift das Federelement das Vierkantrohr an einer Seitenfläche. Beispielsweise ist das Federelement in die Querstrebe eingesetzt vorhanden, sodass es beispielsweise geführt vorhanden ist. Vorteilhafterweise steht ein Ende des Federelements von einer Seitenfläche der Querstrebe ab. Vorteilhafterweise ist ein Ende des Federelements fest, z.B. unlösbar mit der Querstrebe verbunden.

Vorteilhafterweise stützt sich das Federelement insbesondere ausschließlich bei einer Bewegung des Dämpfungsorgans in Richtung maximaler Auslenkung bzw. Ausdehnung des Dämpfungsorgans am Unterteil ab.

### Beschreibung eines Ausführungsbeispiels

Ein Ausführungsbeispiel wird anhand der nachstehenden schematischen Zeichnungen unter Angabe von weiteren Einzelheiten und Vorteilen näher erläutert.

Es zeigen:
- Figur 1: eine perspektivische Ansicht auf eine Vorrichtung von schräg seitlich vorne,
- Figur 2: eine perspektivische Ansicht auf die Vorrichtung nach Figur 1 von schräg seitlich unten hinten,
- Figur 3: eine Hinteransicht der Vorrichtung nach Figur 1,
- Figur 4: eine Seitenansicht der Vorrichtung nach Figur 1,
- Figur 5: eine Unteransicht der Vorrichtung nach Figur 1 und
- Figuren 6: und 7 jeweils eine Schnittansicht durch die Vorrichtung nach Figur 1 entsprechend der in Figur 5 gezeigten Schnittlinien A, B,
- Figur 8: eine perspektivische Ansicht auf eine weitere Vorrichtung von schräg seitlich unten hinten,
- Figur 9: eine Detailansicht (Einzelheit A) der Vorrichtung nach Figur 8,
- Figur 10: eine Detail-Schnittansicht durch eine Mitte der Vorrichtung nach Figur 8.

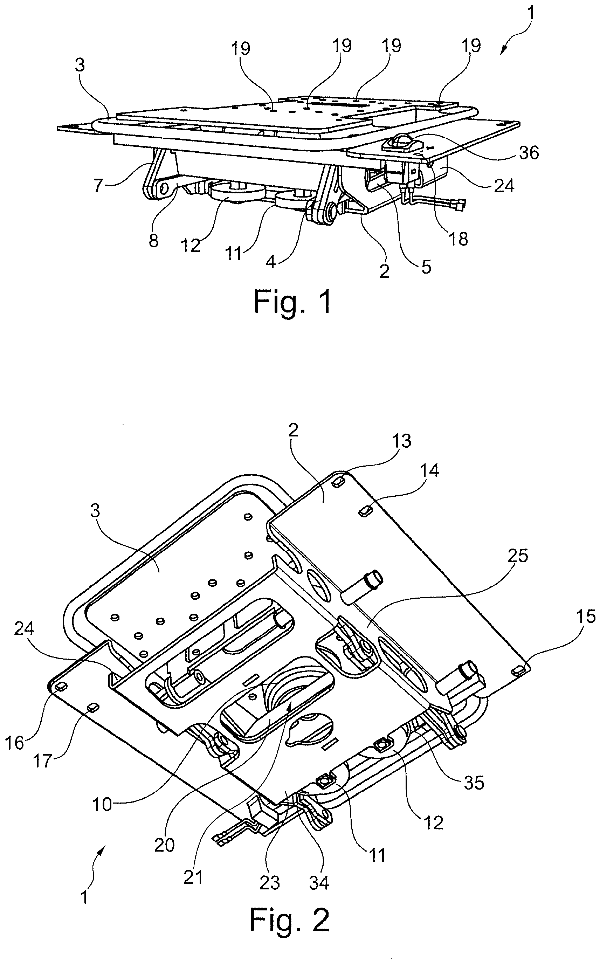

Eine Vorrichtung 1 umfasst ein Unterteil 2, ein Oberteil 3, sechs Stellarme 4 bis 9, ein Dämpfungsorgan 10 sowie zwei Federelemente 11, 12 (Figuren 1 bis 4).

Das Unterteil 2 besitzt beispielsweise Anbindungsmittel 13 bis 18, mittels welchen das Unterteil 3 an ein Fahrzeug (nicht gezeigt) insbesondere positionsfest anordenbar ist. Das Oberteil 3 umfasst Anbindungselemente 19 um eine Dreheinheit (nicht gezeigt) oder einen Fahrzeugsitz (nicht gezeigt) zu befestigen. Zur Klarheit der Figuren sind nicht alle Anbindungselement 19 des Oberteils 3 mit einem Bezugszeichen versehen.

Das Unterteil 2 ist vorteilhafterweise U-förmig ausgebildet, z.B. U-förmig gebogen. Beispielsweise umfasst das Unterteil 2 zwei senkrecht zu einer Unterseite 23 des Unterteils 2 ausgerichtete Seitenelemente 24, 25. Die Seitenelemente 24, 25 sind z.B. winklig zur Unterseite 23 umgebogen und abstehend am Unterteil 2 vorhanden.

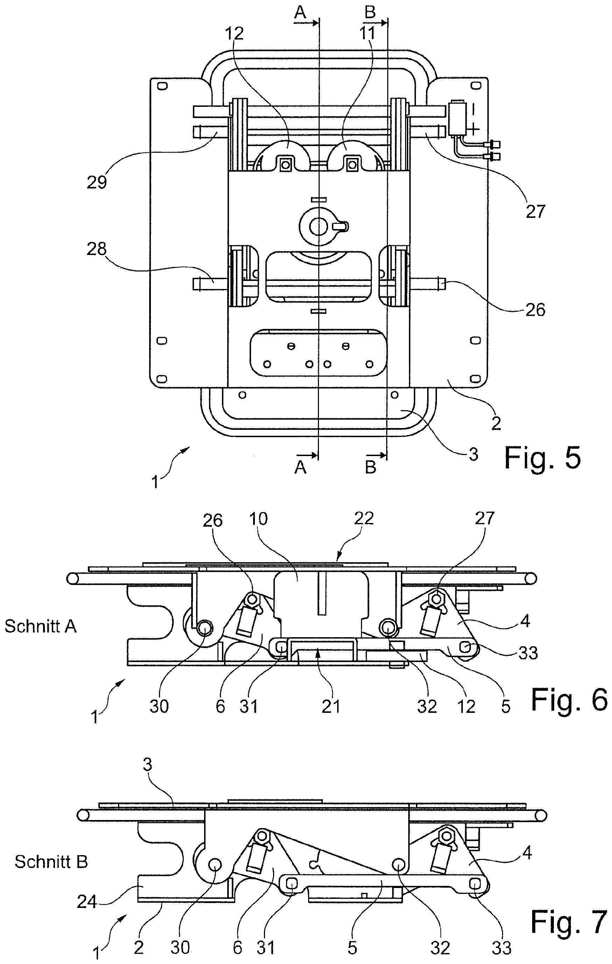

An einem Seitenelement 24, 25 sind jeweils zwei Stellarme 4, 6 bzw. 7, 9 drehbar an jeweils einer Drehachse 26, 27 bzw. 28, 29 drehbar gelagert. Jeder der Stellarme 4, 6, 7, 9, welcher an einem Seitenelement 24, 25 drehbar gelagert ist besitzt vorteilhafterweise zwei weitere Drehachsen. In den Figuren 6, 7 sind die weiteren Drehachsen für ein Set aus den drei Stellarme 4 - 6 mit Drehachsenbezugszeichen 30 - 33 bezeichnet. Ein weiteres Set bestehend aus den Stellarmen 7 - 9 ist vorteilhafterweise identisch z.B. spiegelverkehrt zu den Stellarmen 4 - 6 vorhanden. Die Drehachsen 26 und 28 bzw. 27 und 29 können auch jeweils als eine einzige, insbesondere durchgehende Drehachse vorhanden sein.

Jeder der Stellarme 4, 6 ist an einer ersten Drehachse 26, 27 am Unterteil 2 drehbar gelagert und über eine weitere Drehachse 30, 32 schwenkbar, insbesondere drehbar mit dem Oberteil 3 verbunden. Außerdem sind die Stellarme 4, 6 über zwei weitere Drehachsen 31, 33 mit einem weiteren Stellarm 5 beweglich gekoppelt. Hierdurch bilden die Stellarme 4 - 6 und das Oberteil 3 ein Parallelogramm aus, welches vorteilhaft über die Drehachsen 26, 27 schwenkbeweglich mit dem Unterteil 2 verbunden ist.

Die Stellarme 4, 6, 7, 9 besitzen z.B. eine dreieckige Form. Hierdurch ist das Oberteil 3 derart über die Stellarme 4, 6, 7, 9 relativ bewegbar zum Unterteil 2 lagerbar, dass das Oberteil 3 bei einer Bewegung relativ zum Unterteil 2 in einer vertikaler Bewegungsrichtung im Vergleich zu einer horizontalen Bewegungsrichtung einen vergleichsweise größeren Bewegungsweg zurücklegt. Die vertikale Bewegungsrichtung ist im angeordneten Zustand der Vorrichtung am Fahrzeug senkrecht zu einer Fahrtrichtung und in Richtung Fahrzeugboden bzw. in Richtung Fahrzeughimmel zu sehen. Die horizontale Bewegungsrichtung ist parallel zur Fahrtrichtung zu sehen.

Die Stellarme 5, 8 sind vorteilhafterweise als längliche und/oder stabförmige, insbesondere starre Stellelemente vorhanden.

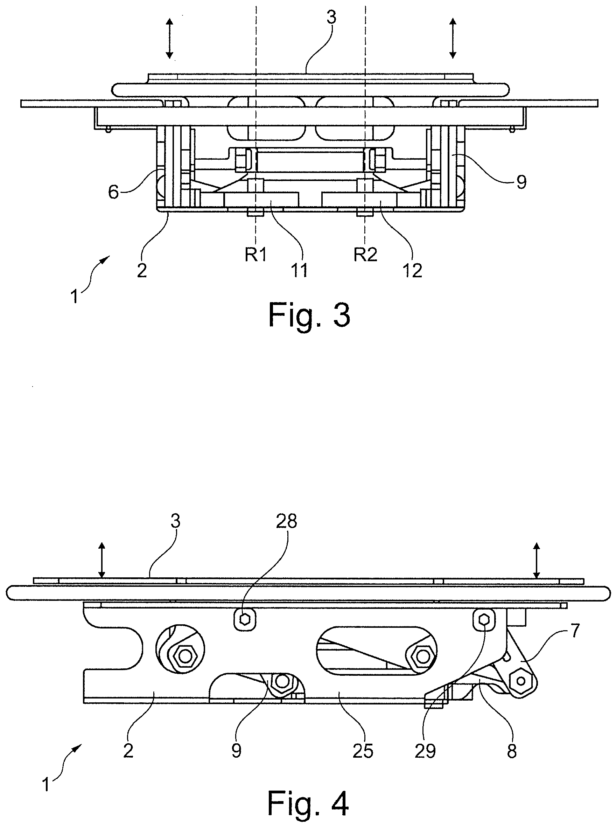

Das Dämpfungsorgan 10 ist an einem Befestigungselement 20 des Unterteils 2 mit einem ersten Ende 21 positionsfest befestigt, insbesondere fixiert. Mit einem dem ersten Ende 21 gegenüberliegenden und beabstandeten Ende 22 ist das Dämpfungsorgan 10 am Oberteil 3 angeordnet, z.B. montiert, insbesondere positionsfest fixiert. Das Dämpfungsorgan 10 ist vorteilhafterweise als ein Faltenbalg ausgebildet. Wird das Dämpfungsorgan 10 bspw. mit Pressluft beaufschlagt, dehnt sich das Dämpfungsorgan 10 insbesondere in vertikaler Richtung aus und drückt damit das Oberteil 3 vom Unterteil 2 weg, sodass sich der vertikale Abstand zwischen Unterteil 2 und Oberteil 3 vergrößert (siehe Figuren 3, 4). Das Oberteil 3 bewegt sich dabei, aufgrund seiner Lagerung am Unterteil 2 über die Stellarme 4 bis 9 nicht nur in vertikaler Richtung vom Unterteil 2 weg, sondern auch in horizontaler Richtung relativ zum Unterteil 2. Vorteilhafterweise bewegt sich das Oberteil 3 annähernd senkrecht zum Unterteil 2. Die Stellarme 4, 6, 7, 9 drehen sich dabei um eine Rotationsachse der Drehachsen 26 - 29.

Bei einer Abstandsveränderung des Oberteils 3 relativ zum Unterteil 2 schwenken die Stellarme 5, 8 sowohl in horizontaler Richtung, als auch in vertikaler Richtung, wobei die horizontale Bewegungskomponente gegenüber der vertikalen Bewegungskomponente bevorzugt überwiegt. Vorteilhafterweise bewegen sich die Stellarme 5, 8 annähernd parallel zur Unterseite 23 des Unterteils 2.

Die Federelemente 11, 12 sind beispielsweise als Flachspiralfedern ausgebildet und z.B. am Unterteil 2 befestigt, insbesondere fixiert. Die Federelemente 11, 12 sind z.B. am Unterteil 2 derart befestigt, sodass eine Rotationsachse R1, R2 der Federelemente 11, 12 senkrecht zur Unterseite 23 ausgerichtet ist. Insbesondere ist die Rotationsachse R1, R2 der Federelemente 11, 12 in vertikaler Richtung ausgerichtet. Ein Ende 34 bzw. 35 des Federelements 11 bzw. 12 greift am Stellarm 5 bzw. 8 an, sodass das Federelement 11 bzw. 12 mit einer Federkraft auf den Stellarm 5 bzw. 8 wirkt. Hierdurch wirkt das Federelement 11 bzw. 12 einer insbesondere horizontalen Bewegung des Stellarm 5 bzw. 8 und damit einer insbesondere vertikalen Bewegung des Oberteils 3 weg vom Unterteil 2 entgegen. Das Federelement 11 bzw. 12 ist derart an der Vorrichtung 1 angeordnet, dass das Oberteil 3 durch die Federkraft des Federelements 11 bzw. 12 in Richtung Unterteil 2 gezogen wird. Das Federelement 11 bzw. 12 ist bspw. derart an der Vorrichtung 1 angeordnet, dass die Federkraft des Federelements 11 bzw. 12 einer Ausdehnungskraft des Dämpfungselements 10 entgegenwirkt.

Vorteilhafterweise ist das Federelement 11 bzw. 12 derart ausgebildet und an der Vorrichtung 1 vorhanden, dass das Oberteil 3 in einer Bewegung einen maximalen Abstand relativ zum Unterteil 2, welcher aufgrund der Mechanik der Stellarme 4 - 9 definiert ist, nicht erreicht.

Die Vorrichtung 1 umfasst z.B. außerdem einen Schalter 36, mittels welchem eine Zuleitung des Dämpfungsorgans 10 schaltbar ist. Hierdurch ist ein Druck innerhalb des Dämpfungsorgans 10 einstellbar.

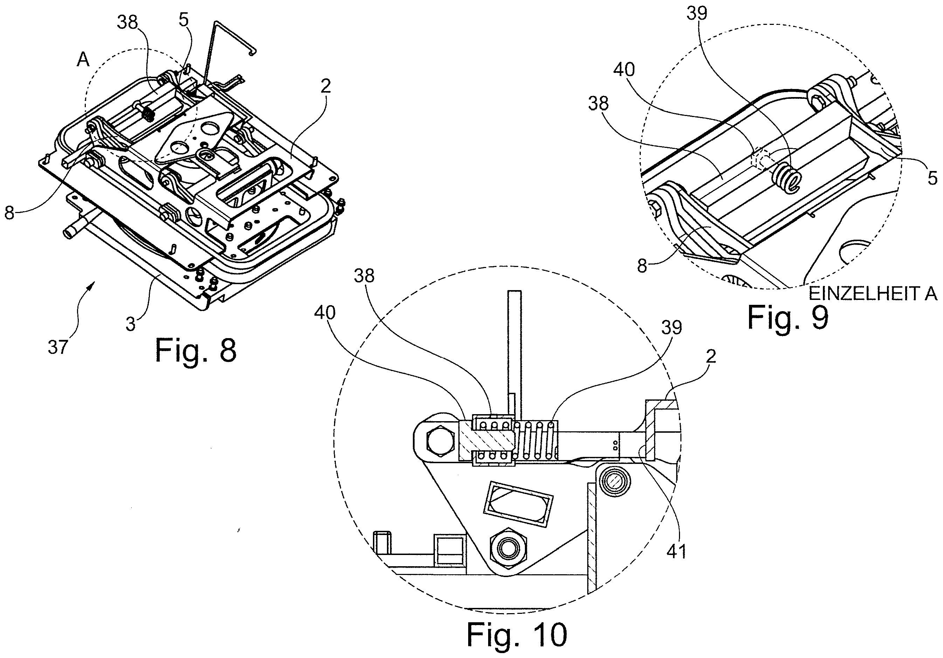

Eine weitere Vorrichtung 37 ist in Figur 8 bis 10 dargestellt. Die Vorrichtung 37 gemäß den Figuren 8 bis 10 unterscheidet sich von der Vorrichtung 1 gemäß den Figuren 1 bis 7 in der Ausgestaltung und Anordnung des Federelements. Die Beschreibung zur Mechanik des Oberteils 3, des Unterteils 3, des Dämpfungsorgans 10 und der Stellarme 4 bis 9 der Vorrichtung 1 kann auf die Vorrichtung 37 angewendet werden.

In der Vorrichtung 37 sind die Stellarme 5 und 8 durch eine Querstrebe 38 miteinander verbunden. Die Querstrebe 38 ist beispielsweise an die Stellarme 5 und 8 geschraubt und/oder geschweißt. An der Querstrebe 38 ist beispielsweise das Federelement in Form einer Schraubenfeder 39 angeordnet. Die Schraubenfeder 39 ist vorteilhafterweise als eine Druckfeder ausgebildet.

Die Querstrebe 38 ist beispielsweise als ein Vierkantrohr vorhanden. Die Schraubenfeder 39 ist beispielsweise mit einem Ende in ein Inneres der Querstrebe 39 eingesetzt und an der Querstrebe 38 befestigt, z.B. mit einer Schraube 40 angeschraubt.

Das Unterteil 2 der Vorrichtung 38 umfasst beispielsweise einen Anschlag 41. Der Anschlag 41 ist beispielsweise als abgewinkeltes Anschlagstück am Unterteil 2 vorhanden.

Bei einer Auslenkung des Oberteils 3 in vertikaler Richtung weg vom Unterteil 2, wirkt die Schraubenfeder 39 einer insbesondere horizontalen Bewegung der Querstrebe 38 und damit der Stellarme 5 bzw. 8 entgegen, indem die Querstrebe 38 und damit die Schraubenfeder 39 bei der Auslenkung des Oberteils 3 in Richtung Anschlag 41 bewegt werden und die Schraubenfeder 39 am Anschlag 41 ansteht und damit die Bewegung dämpft.

Das Federelement 39 ist vorteilhafterweise mittig an der Querstrebe 38 angeordnet. Das Federelement 39 ist beispielsweise mittig zwischen den Stellarmen 4 bis 9 vorhanden. Eine Rotationsachse der Schraubenfeder 39 ist vorteilhafterweise in Längserstreckung der Stellarme 5 bzw. 8 ausgerichtet.

### Bezugszeichenliste

- 1: Vorrichtung
- 2: Unterteil
- 3: Oberteil
- 4 - 9: Stellarm
- 10: Dämpfungsorgan
- 11: Federelement
- 12: Federelement
- 13 - 18: Anbindungsmittel
- 19: Anbindungselement
- 20: Befestigungselement
- 21: Ende
- 22: Ende
- 23: Unterseite
- 24, 25: Seitenelement
- 26 - 33: Drehachse
- 34, 35: Ende
- 36: Schalter
- 37: Vorrichtung
- 38: Querstrebe
- 39: Schraubenfeder
- 40: Schraube
- 41: Anschlag

## Patentansprüche

1. Vorrichtung (1, 37) zur Höhenverstellung eines Fahrzeugsitzes, wobei die Vorrichtung (1, 37) ein Unterteil (2) zur Anordnung an ein Fahrzeug umfasst, wobei die Vorrichtung (1, 37) ein Oberteil (3) zur Anordnung eines Fahrzeugsitzes und/oder zur Anordnung einer Dreheinheit für einen Fahrzeugsitz aufweist, wobei das Unterteil (2) und das Oberteil (3) über einen Stellarm (4, 6, 7, 9) miteinander gekoppelt sind, wobei die Vorrichtung (1, 37) ein Dämpfungsorgan (10) besitzt, wobei
das Dämpfungsorgan (10) zwischen dem Oberteil (3) und dem Unterteil (2) vorhanden ist, wobei das Dämpfungsorgan (10) dazu ausgebildet ist, einen Abstand des Oberteils (3) zum Unterteil (2) zu verändern und wobei die Vorrichtung (1, 37) ein Federelement (39) umfasst und das Federelement (39) derart an der Vorrichtung (1) vorhanden ist, dass es entgegen einer Ausdehnungsrichtung des Dämpfungsorgans (10) wirkt, **dadurch gekennzeichnet dass**
das Federelement (39) als eine Schraubenfeder oder als eine Spiralfeder ausgebildet ist, und dass das Oberteil (3) zwischen einem Endanschlag des Federelements (39) und einem Endanschlag des Dämpfungsorgans (10) beweglich gelagert ist.

2. Vorrichtung (1, 37) zur Höhenverstellung eines Fahrzeugsitzes nach dem Oberbegriff des Anspruchs 1, insbesondere nach Anspruch 1, **dadurch gekennzeichnet, dass** die Vorrichtung (1, 37) zwei oder mehr Stellarme (4 - 9) aufweist, wobei das Oberteil (3) und die Stellarme (4 - 9) parallelogrammartig angeordnet und zueinander verstellbar vorhanden sind.

3. Vorrichtung (1, 37) zur Höhenverstellung eines Fahrzeugsitzes nach einem der vorangegangenen Ansprüche, **dadurch gekennzeichnet, dass** das Federelement (11, 12, 39) am Unterteil (2) angeordnet ist.

4. Vorrichtung (1, 37) zur Höhenverstellung eines Fahrzeugsitzes nach einem der vorangegangenen Ansprüche, **dadurch gekennzeichnet, dass** das Federelement (39) in einer Weise zwischen dem Unterteil (2) und einem ersten Stellarm (5, 8) angeordnet ist, dass das Federelement (39) einer maximalen Ausdehnung, z.B. einem maximalen Volumen und/oder einer maximalen Auslenkung, des Dämpfungsorgans (10) entgegenwirkt.

5. Vorrichtung (1, 37) zur Höhenverstellung eines Fahrzeugsitzes nach einem der vorangegangenen Ansprüche, **dadurch gekennzeichnet, dass** eine Rotationsachse des Federelements (39) parallel zu einer Bewegungsrichtung des Oberteils (3) vorhanden ist.

6. Vorrichtung (1, 37) zur Höhenverstellung eines Fahrzeugsitzes nach einem der vorangegangenen Ansprüche, **dadurch gekennzeichnet, dass** das Federelement (39) mit einem Stellarm (5, 8) koppelt.

7. Vorrichtung (1, 37) zur Höhenverstellung eines Fahrzeugsitzes nach einem der vorangegangenen Ansprüche, **dadurch gekennzeichnet, dass** das Federelement (39) über eine Querstrebe (38) mit einem Stellarm (5, 8) koppelt.

8. Vorrichtung (1, 37) zur Höhenverstellung eines Fahrzeugsitzes nach dem vorangegangenen Anspruch 7, **dadurch gekennzeichnet, dass** das Federelement (39) an der Querstrebe (38) befestigt ist.

9. Vorrichtung (1, 37) zur Höhenverstellung eines Fahrzeugsitzes nach einem der vorangegangenen Ansprüche, **dadurch gekennzeichnet, dass** die Vorrichtung (1, 37) mindestens sechs Schwenkachsen (26, 27, 30 - 33) aufweist.

10. Vorrichtung (1, 37) zur Höhenverstellung eines Fahrzeugsitzes nach einem der vorangegangenen Ansprüche, **dadurch gekennzeichnet, dass** das Oberteil (3) drehbeweglich zum Unterteil (2) vorhanden ist.

11. Vorrichtung (1, 37) zur Höhenverstellung eines Fahrzeugsitzes nach einem der vorangegangenen Ansprüche, **dadurch gekennzeichnet, dass** die Vorrichtung (1, 37) einen Schalter (36) umfasst, welcher dazu ausgestaltet ist, eine Ausdehnung des Dämpfungsorgans (10) zu schalten und/oder zu regulieren.

12. Fahrzeugsitz mit einer Vorrichtung (1, 37) nach einem der vorangegangenen Ansprüche.

13. Fahrzeug mit einer Vorrichtung (1, 37) nach einem der vorangegangenen Ansprüche 1 bis 11 oder einem Fahrzeugsitz nach dem vorangegangenen Anspruch 12.

## Claims

1. Device (1, 37) for adjusting the height of a vehicle seat, wherein the device (1, 37) comprises a lower part (2) for arranging on a vehicle, wherein the device (1, 37) has an upper part (3) for arranging a vehicle seat and/or for arranging a rotary unit for a vehicle seat, wherein the lower part (2) and the upper part (3) are coupled together via an actuating arm (4, 6, 7, 9), wherein the device (1, 37) has a damping member (10), wherein the damping member (10) is present between the upper part (3) and the lower part (2), wherein the damping member (10) is configured to alter a spacing of the upper part (3) relative to the lower part (2), and wherein the device (1, 37) comprises a spring element (39) and the spring element (39) is present on the device (1) such that it acts counter to a direction of extension of the damping member (10), **characterized in that** the spring element (39) is in the form of a coil spring or of a spiral spring, and **in that** the upper part (3) is movably mounted between an end stop of the spring element (39) and an end stop of the damping member (10).

2. Device (1, 37) for adjusting the height of a vehicle seat according to the preamble of Claim 1, in particular according to Claim 1, **characterized in that** the device (1, 37) has two or more actuating arms (4-9), wherein the upper part (3) and the actuating arms (4-9) are arranged in the manner of a parallelogram and are present so as to be adjustable relative to one another.

3. Device (1, 37) for adjusting the height of a vehicle seat according to either of the preceding claims, **characterized in that** the spring element (11, 12, 39) is arranged on the lower part (2).

4. Device (1, 37) for adjusting the height of a vehicle seat according to one of the preceding claims, **characterized in that** the spring element (39) is arranged between the lower part (2) and a first actuating arm (5, 8) in such a way that the spring element (39) acts counter to a maximum extension, for example a maximum volume and/or a maximum deflection, of the damping member (10).

5. Device (1, 37) for adjusting the height of a vehicle seat according to one of the preceding claims, **characterized in that** an axis of rotation of the spring element (39) is present parallel to a direction of movement of the upper part (3).

6. Device (1, 37) for adjusting the height of a vehicle seat according to one of the preceding claims, **characterized in that** the spring arm (39) is coupled to an actuating arm (5, 8).

7. Device (1, 37) for adjusting the height of a vehicle seat according to one of the preceding claims, **characterized in that** the spring element (39) is coupled to an actuating arm (5, 8) via a cross strut (38).

8. Device (1, 37) for adjusting the height of a vehicle seat according to the preceding Claim 7, **characterized in that** the spring element (39) is fastened to the cross strut (38).

9. Device (1, 37) for adjusting the height of a vehicle seat according to one of the preceding claims, **characterized in that** the device (1, 37) has at least six pivot pins (26, 27, 30-33).

10. Device (1, 37) for adjusting the height of a vehicle seat according to one of the preceding claims, **characterized in that** the upper part (3) is present so as to be rotatable relative to the lower part (2) .

11. Device (1, 37) for adjusting the height of a vehicle seat according to one of the preceding claims, **characterized in that** the device (1, 37) comprises a switch (36) which is designed to control and/or to regulate an extension of the damping member (10) .

12. Vehicle seat having a device (1, 37) according to one of the preceding claims.

13. Vehicle having a device (1, 37) according to one of the preceding Claims 1 to 11 or a vehicle seat according to the preceding Claim 12.

## Revendications

1. Dispositif (1, 37) pour le réglage en hauteur d'un siège de véhicule, le dispositif (1, 37) comprenant une partie inférieure (2) pour l'agencement sur un véhicule, le dispositif (1, 37) présentant une partie supérieure (3) pour l'agencement d'un siège de véhicule et/ou pour l'agencement d'une unité de rotation pour un siège de véhicule, la partie inférieure (2) et la partie supérieure (3) étant couplées l'une à l'autre par l'intermédiaire d'un bras de réglage (4, 6, 7, 9), le dispositif (1, 37) possédant un organe d'amortissement (10), l'organe d'amortissement (10) étant présent entre la partie supérieure (3) et la partie inférieure (2), l'organe d'amortissement (10) étant configuré pour modifier une distance entre la partie supérieure (3) et la partie inférieure (2) et le dispositif (1, 37) comprenant un élément de ressort (39) et l'élément de ressort (39) étant présent sur le dispositif (1) de telle sorte qu'il agit à l'encontre d'une direction d'extension de l'organe d'amortissement (10), **caractérisé en ce que** l'élément de ressort (39) est configuré sous la forme d'un ressort hélicoïdal ou sous la forme d'un ressort en spirale, et **en ce que** la partie supérieure (3) est montée de manière mobile entre une butée d'extrémité de l'élément de ressort (39) et une butée d'extrémité de l'organe d'amortissement (10).

2. Dispositif (1, 37) pour le réglage en hauteur d'un siège de véhicule selon le préambule de la revendication 1, notamment selon la revendication 1, **caractérisé en ce que** le dispositif (1, 37) présente deux ou plus de deux bras de réglage (4 à 9), la partie supérieure (3) et les bras de réglage (4 à 9) étant agencés à la manière d'un parallélogramme et étant présents de manière réglable les uns par rapport aux autres.

3. Dispositif (1, 37) pour le réglage en hauteur d'un siège de véhicule selon l'une quelconque des revendications précédentes, **caractérisé en ce que** l'élément de ressort (11, 12, 39) est agencé sur la partie inférieure (2) .

4. Dispositif (1, 37) pour le réglage en hauteur d'un siège de véhicule selon l'une quelconque des revendications précédentes, **caractérisé en ce que** l'élément de ressort (39) est agencé entre la partie inférieure (2) et un premier bras de réglage (5, 8) de telle sorte que l'élément de ressort (39) s'oppose à une extension maximale, p. ex. un volume maximal et/ou une déviation maximale, de l'organe d'amortissement (10).

5. Dispositif (1, 37) pour le réglage en,hauteur d'un siège de véhicule selon l'une quelconque des revendications précédentes, **caractérisé en ce qu'**un axe de rotation de l'élément de ressort (39) est parallèle à une direction de mouvement de la partie supérieure (3).

6. Dispositif (1, 37) pour le réglage en hauteur d'un siège de véhicule selon l'une quelconque des revendications précédentes, **caractérisé en ce que** l'élément de ressort (39) est couplé à un bras de réglage (5, 8).

7. Dispositif (1, 37) pour le réglage en hauteur d'un siège de véhicule selon l'une quelconque des revendications précédentes, **caractérisé en ce que** l'élément de ressort (39) est couplé à un bras de réglage (5, 8) par l'intermédiaire d'une entretoise transversale (38).

8. Dispositif (1, 37) pour le réglage en hauteur d'un siège de véhicule selon la revendication 7 précédente, **caractérisé en ce que** l'élément de ressort (39) est fixé à l'entretoise transversale (38).

9. Dispositif (1, 37) pour le réglage en hauteur d'un siège de véhicule selon l'une quelconque des revendications précédentes, **caractérisé en ce que** le dispositif (1, 37) présente au moins six axes de pivotement (26, 27, 30 à 33).

10. Dispositif (1, 37) pour le réglage en hauteur d'un siège de véhicule selon l'une quelconque des revendications précédentes, **caractérisé en ce que** la partie supérieure (3) est mobile en rotation par rapport à la partie inférieure (2).

11. Dispositif (1, 37) pour le réglage en hauteur d'un siège de véhicule selon l'une quelconque des revendications précédentes, **caractérisé en ce que** le dispositif (1, 37) comprend un commutateur (36) qui est conçu pour commuter et/ou réguler une extension de l'organe d'amortissement (10).

12. Siège de véhicule avec un dispositif (1, 37) selon l'une quelconque des revendications précédentes.

13. Véhicule avec un dispositif (1, 37) selon l'une quelconque des revendications 1 à 11 précédentes ou un siège de véhicule selon la revendication 12 précédente.
